# EUROPEAN PATENT APPLICATION

(11) **EP 2 165 782 A1**
(43) Date of publication of application: **24.03.2010**
(21) Application number: 08752984.8
(22) Date of filing: 20.05.2008
(51) Int. Cl.: B21D 28/00

(54) **SLAG RISE PREVENTING METHOD, AND PUNCH MOLD**

(30) Priority: 22.05.2007 JP 2007135769; 19.02.2008 JP 2008037670
(71) Applicant: Amada Co., Ltd., Isehara-shi, Kanagawa 259-1196 (JP); Amada Tool Technica Co., Ltd., Kanagawa 259-1196 (JP)
(72) Inventor: OKAMOTO, Takuya, Kanagawa 259-1196 (JP)
(74) Representative: Grünecker, Kinkeldey, Stockmair & Schwanhäusser Anwaltssozietät
(86) International application number: PCT/JP2008/059188
(87) International publication number: WO 2008/143236

(57) **Abstract**

Provided are a slug float-up preventing method and a punch tool in performing a punching process on a plate-shaped workpiece (W) by cooperation between a punch tool (1) and a die tool (25), in which the workpiece is pressed onto an upper surface of the die tool by use of a plate holder (7) provided on the punch tool, part of the workpiece is punched out into a die hole (27) in the die tool by use of a punch blade (13) provided on the punch tool, a large amount of fluid is blown from a portion of a hole already processed on the workpiece toward a lower side of the punch blade (13) when the punch blade (13) is being lifted and is located above a lower surface of the workpiece and below an upper surface of the workpiece, and a small piece of slug located below the punch blade is dropped into the die hole (27).

## Description

### TECHNICAL FIELD

The Present invention relates to a slug float-up preventing method for preventing punched-out slug from coming up above an upper surface of a plate-shaped workpiece when performing a punching process on the workpiece by using a punch tool and a die tool provided on a punch press such as a turret punch press, and to a punch tool used for this method.

### BACKGROUND ART

Conventionally, when performing a punching process on a plate-shaped workpiece by using a punch tool and a die tool provided on a punch press, a punched-out blank (slug) may adhere to a lower surface of a punch blade at a lower end of a punch body provided to be vertically movable on the punch tool, whereby the slug may be lifted above an upper surface of the workpiece by being lifted integrally with the punch body when the punch body is lifted. Accordingly, in order to prevent such a slug float-up, a structure for holding the blank on an inner peripheral surface of a die hole in a die tool has been made or a configuration to jet a fluid downward from a punch tool has been employed conventionally. These techniques are disclosed in Japanese Utility Model Application Laid-open No. Hei 1-118828, for example (Patent Document 1).

A structure of a punch tool disclosed in Patent Document 1 is a structure as shown in Fig. 1. Specifically, a punch tool 1 includes a cylindrical punch guide 5 supported to be vertically movable by an upper tool holder 3 of a punch press, and a through-hole 9 in a vertical direction is formed in a plate holder 7 provided at a lower part of this punch guide 5. Moreover, a punch blade 13 that is vertically movable inside the through-hole 9 is provided at a lower end of a punch body 11 that is disposed inside the punch guide 5 so as to be vertically movable.

Further, a fluid passage 21 which communicatively connects an annular space 15 to a fluid supply hole 19 is formed in the punch body 11. The annular space 15 is located between an outer peripheral surface of a small diameter portion at a lower part of the punch body 11 and an inner peripheral surface of the punch guide 5. The fluid supply hole 19 is formed inside a striker 17 provided to be vertically movable on the punch press. In addition, grooves 29 for jetting downward a fluid inside the space 15 are formed at multiple positions in the inner peripheral surface of the through-hole 9 in the punch guide 5 in order to drop a blank (slug) into a die hole 27 in the die tool 25, the blank punched out by a punching process performed on a plate-shaped workpiece W in cooperation with a die tool 25 supported on a die holder 23 of the punch press.

In the above-described configuration, when performing the punching process on the workpiece W, the punch tool 1 is brought down by bringing the striker 17 downward and the workpiece W is pressed and fixed onto an upper surface of the die tool 25 by use of the plate holder 7 of the punch guide 5, and then the punching process is executed by the punch blade 13 provided on the punch body 11. At this time, the shape of the punched-out blank is equal to the shapes of the punch blade 13 and the die hole 27. Then, by the action of the fluid jetted downward from the grooves 29 and from fine clearances 31 between the outer peripheral surface of the small diameter portion (the portion slightly above the punch blade 13) of the punch body 11 and the inner peripheral surface of the through-hole 9, the blank is prevented from adhering to the lower surface of the punch blade 13 and from being lifted integrally with the punch body 11.

That is, when punching out the blank in the same shape as the die hole 27 of the die tool 25, the die hole 27 is occluded by the blank as the blank goes into the die hole 27, and the fluid jetted downward from the grooves 29 and the like easily enters a space between the blank and the punch blade 13, and thereby adhesion between the punch blade 13 and the blank is easily prevented.

Meanwhile, when performing the punching process on the workpiece by cooperation between the punch tool 1 and the die tool 25, the blank 7 is not always punched out in the same shape as the punch blade 13 and the die hole 27 as described above, but the slug smaller than the punch blade 13 and the die hole 27 is continuously punched out as in a nibbling process, for example.

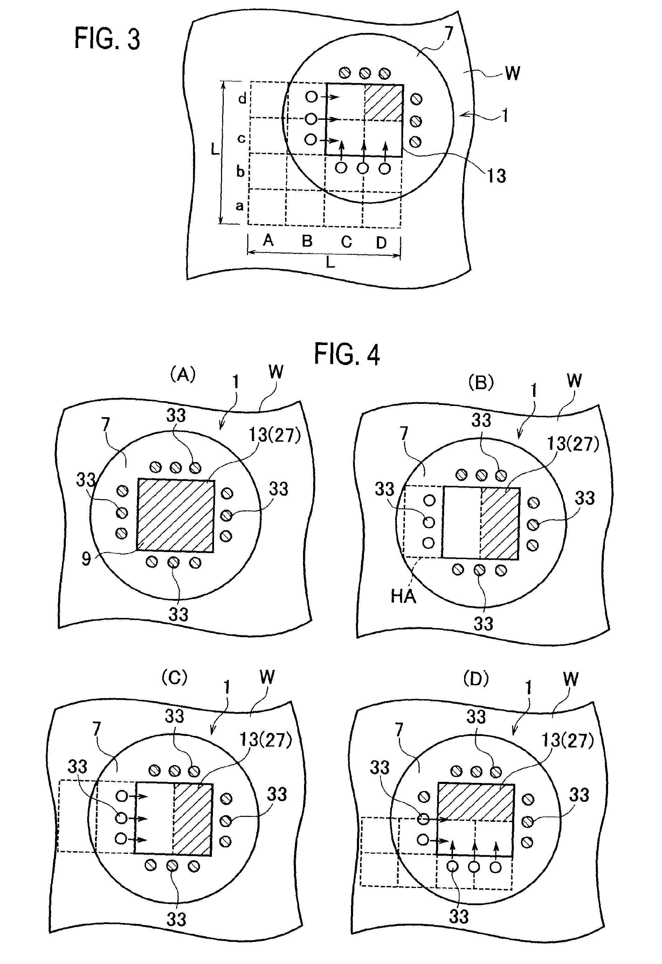

An operation of continuously punching the slug as described above will be explained below with reference to Fig. 3 to Fig. 5(D) representing an action in an embodiment of the present invention.

First, as shown in Fig. 3, when punching, in a workpiece W, a square hole having a length of each side equal to L, a nibbling process may be executed by use of the punch tool 1 provided with the square punch blade 13 having a length of each side equal to L/2. In this case, regions Aa, Ab, Ba, and Bb (see Fig. 3) are subjected to punching in the first place as shown in Fig. 4(A). Thereafter, regions Ca and Cb are subjected to punching as shown in Fig. 4(B). Subsequently, adjacent regions Da and Db are subjected to punching (see Fig. 4(C)).

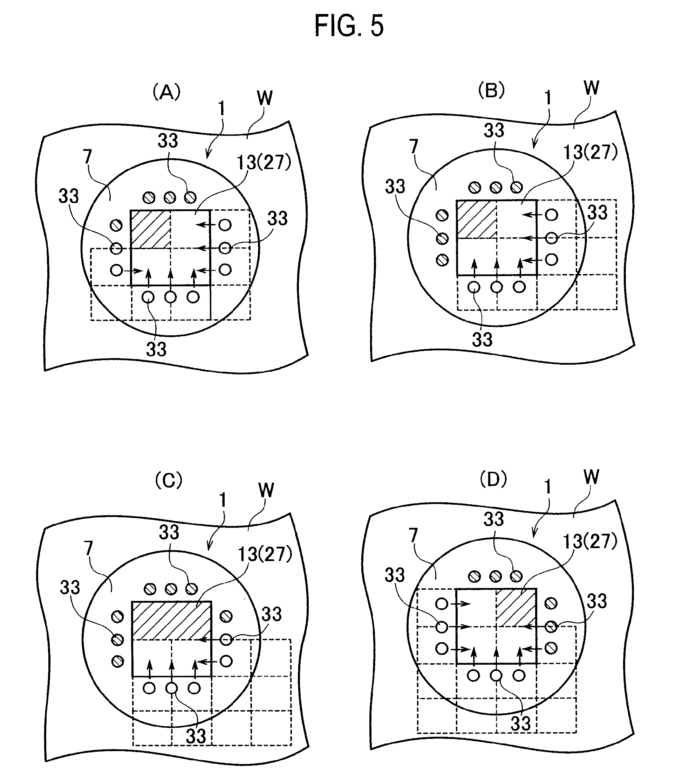

Then, adjacent regions Cc and Dc are subjected to punching (see Fig. 4(D)). Subsequently, a region Bc (see Fig. 5(A)), a region Ac (see Fig. 5(B)), regions Ad and Bd (see Fig. 5(C)), and a region Cd (see Fig. 5(D)) are sequentially subjected to punching. Lastly, Dd (see Fig. 3) is subjected to punching, whereby the square hole having the length of each side equal to L is punched out.

When performing the punching process on the workpiece W as described above, the size of the blank (a shaded portion) punched out of the workpiece is equal to the size of the die hole 27 in the state shown in Fig. 4(A), and four directions (four sides) thereof tend to contact (to be captured by) the peripheral surface of the die hole 27. In the states shown in Figs. 4(B), 4(C), 4(D), and 5(C), the size of the blank is half as large as the die hole 27 but is still considerably large, and moreover, three directions (three sides) thereof tend to contact (to be captured by) the peripheral surface of the die hole 27.

However, in the states shown in Figs. 5(A), 5(B), 5(D), and Fig. 3, the punched-out blank has a size equal to 1/4 as large as the die hole 27 and is quite small, and moreover, the blank is in a free state, for example, in a horizontally movable state in the die hole 27, after being punched out. Therefore, the punched-out small blank is apt to adhere to a lower surface of the punch blade 13 and to be lifted integrally with the punch blade 13. That is, a slug float-up tends to occur.

Here, when performing nibbling as explained above by using the above-described punch tool 1, if the plate holder 7 contacts an upper surface of the workpiece W in the states of Fig. 3, Figs. 4(B) to 4(D), and Figs. 5(A) to 5(D), for example, portions of the above-described grooves 29 and clearances 31 corresponding to the upper surface of the workpiece W are occluded and the fluid is jetted vertically downward from the grooves 29 and the clearances 31 at portions corresponding to the hole already punched in the workpiece W. Then, as the nibbling process of the workpiece is carried out, the fluid is jetted vertically downward from all the grooves 29 and the clearances 31. Then, as the punch guide 5 is lifted and the plate holder 7 is detached from the upper surface of the workpiece, part of the fluid will hit the upper surface of the workpiece and will flow horizontally along the upper surface of the workpiece.

In this case, the fluid jetted from the grooves 29 and the clearances 31 has a large tendency to be guided by the peripheral surface of the punch blade 13 and to be directed vertically downward, and hence the fluid has a small tendency to flow on the lower surface of the punch blade 13. That is, an inner peripheral surface of the flow of the annular fluid jetted vertically downward from the periphery of the punch blade 13 is guided downward by the outer peripheral surface of the punch blade 13. Accordingly, the annularly jetted fluid is inevitably directed vertically downward.

Therefore, when punching out the considerably small (such as 1/4 or below) blank (slug) compared to the area of the punch blade 13, the slug may adhere to the lower surface of the punch blade 13 and may be lifted integrally. Then, when the slug free-falls after the punch blade 13 is appropriately lifted, the slug may be blown away into the die hole 27, and moreover, the slug may be occasionally deviated from the die hole 27 and blown away onto the upper surface of the workpiece.

This invention has been made to solve the above-described problem and an object thereof is to provide a slug float-up preventing method and a punch tool that are capable of effectively preventing a slug float-up of a small piece of slug.

### DISCLOSURE OF THE INVENTION

In order to achieve the object, a method according to a first aspect of the present invention is a slug float-up preventing method in performing a punching process on a plate-shaped workpiece by cooperation between a punch tool and a die tool, including the steps of: pressing the workpiece onto an upper surface of the die tool by use of a plate holder provided on the punch tool; punching part of the workpiece out into a die hole in the die tool by use of a punch blade provided on the punch tool; blowing a large amount of a fluid from a portion of a hole already processed on the workpiece toward a lower side of the punch blade when the punch blade is being lifted and is located above a lower surface of the workpiece and below an upper surface of the workpiece; and dropping a small piece of slug located below the punch blade into the die hole.

The slug float-up preventing method according to a second aspect, which depends on the first aspect, of the present invention is that, in the above-described configuration, a direction to blow the fluid is a blowing direction directed from around the punch blade toward a central part of the die hole.

The slug float-up preventing method according to a third aspect, which depends on any one of the first aspect and the second aspect, of the present invention is that in the above-described configuration, the fluid is formed into a flow which hits the upper surface of the die tool and is directed toward a center of the die hole.

A device according to a fourth aspect of the present invention is a punch tool for performing a punching process on a plate-shaped workpiece in cooperation with a die tool, including: a cylindrical punch guide including a plate holder at a lower end thereof; and a punch body provided to be vertically movable inside the punch guide and including a punch blade at a lower end thereof. In the above structure, the plate holder includes a through-hole in which the punch blade is vertically movable, fluid jet holes not communicating with the through-hole are provided in a plurality of positions around the through-hole, and the plurality of fluid jet holes are directed obliquely downward so as to concentrate the fluid to a central part of a die hole provided on the die tool.

The slug float-up preventing method according to a fifth aspect, which depends on the fourth aspect, of the present invention includes, in the above described configuration, second fluid jet holes communicating with the through-hole and located in a plurality of positions around the through-hole. In this configuration, the plurality of second fluid jet holes are directed obliquely downward so as to concentrate the fluid to the central part of the die hole provided on the die tool.

A device according to a sixth aspect of the present invention is a punch tool for performing a punching process on a plate-shaped workpiece in cooperation with a die tool, including: a cylindrical punch guide including a plate holder on a lower end thereof; and a punch body provided to be vertically movable inside the punch guide and including a punch blade at a lower end thereof. In the above configuration, the plate holder includes a through-hole in which the punch blade is vertically movable, fluid jet holes communicating with the through-hole are provided in a plurality of positions around the through-hole, and the plurality of fluid jet holes are directed obliquely downward so as to concentrate the fluid to a central part of a die hole provided on the die tool.

According to the first aspect to the sixth aspect of the present invention, the jetted fluid tends to flow on the lower surface of the punch blade and the slug can be blown into the die hole of the die tool when the slug falls off at the time of lifting the punch tool. Therefore, a slug float-up of a small piece of slug can be prevented effectively.

### BRIEF DESCRIPTION OF THE DRAWINGS

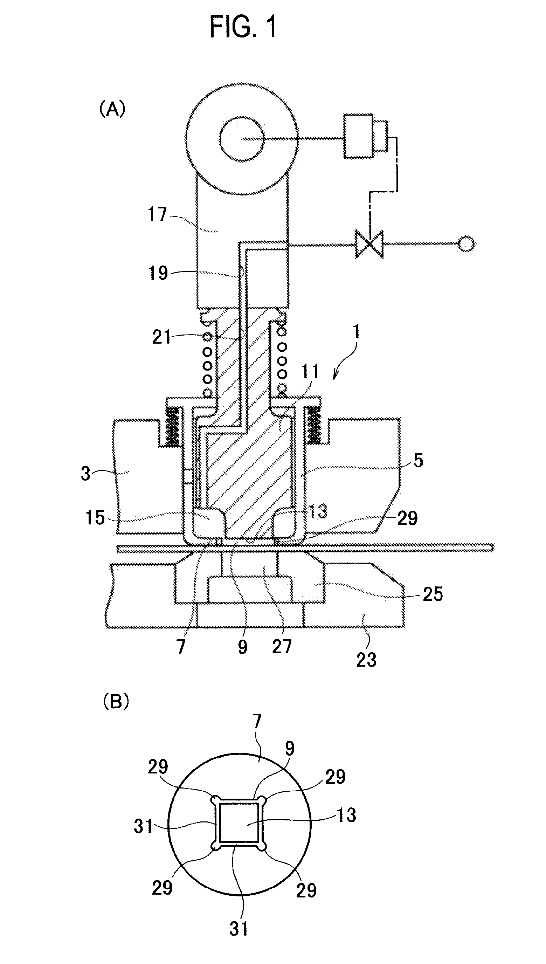

[Fig. 1] Figs. 1(A) and 1(B) are cross-sectional explanatory views showing a structure of a conventional punch tool.
[Fig. 2] Fig. 2 is a cross-sectional explanatory view showing a principal part of a punch tool according to an embodiment of the present invention.
[Fig.3] Fig. 3 is an operation explanatory view when performing a punching process on a plate-shaped workpiece by using the punch tool according to the embodiment of the present invention.
[Fig. 4] Figs. 4(A), 4(B), 4(C), and 4(D) are operation explanatory views when performing the punching process on the plate-shaped workpiece by using the punch tool according to the embodiment of the present invention.
[Fig. 5] Figs. 5(A), 5(B), 5(C), and 5(D) are operation explanatory views when performing the punching process on the plate-shaped workpiece by using the punch tool according to the embodiment of the present invention.
[Fig. 6] Fig. 6 is a cross-sectional explanatory view showing a principal part of a punch tool according to a second embodiment of the present invention.
[Fig. 7] Fig. 7 is a cross-sectional explanatory view showing a principal part of a punch tool according to a third embodiment of the present invention.
[Fig. 8] Fig. 8 is a cross-sectional explanatory view showing a principal part of a punch tool according to a fourth embodiment of the present invention.

### BEST MODES FOR CARRYING OUT THE INVENTION

While embodiments of the present invention will be described below by using the drawings, constituents performing functions identical to those in the above-described conventional configuration will be designated by identical reference numerals and duplicate explanation will be omitted.

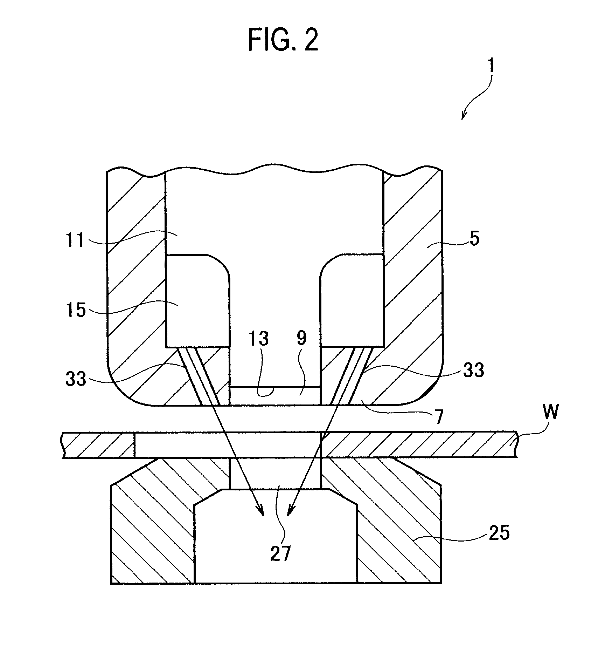

With reference to conceptually and schematically illustrated Fig. 2, configurations of a punch tool and a die tool according to this embodiment are substantially the same as the punch tool 1 and the die tool 25 described above. Specifically, the punch tool 1 includes a cylindrical punch guide 5, and a plate holder 7 is provided at a lower part of this punch guide 5. Moreover, multiple fluid jet holes 33 communicated with an annular space 15 are formed around a vertical through-hole 9 formed on this plate holder 7. The fluid jet holes 33 are provided in a non-communicated state which is not directly communicated with the through-hole 9, and are directed obliquely downward so that flows of the fluid jetted from the respective fluid jet holes 33 are concentrated on a central part of a die hole 27 provided on the die tool 25 when lifting the punch guide 5. In other words, the multiple fluid jet holes 33 are arranged along a cone face which is tapered downward.

In the above-described configuration, when a plate-shaped workpiece W is placed on the die tool 25 and a first punching process is executed by use of the punch tool 1, as the workpiece W is pressed and fixed onto the die tool 25 by use of the plate holder 7 of the punch tool 1, the multiple fluid jet holes 33 provided around the through-hole 9 on the plate holder 7 are occluded by an upper surface of the workpiece W. Then, as regions Aa, Ab, Ba, and Bb of the workpiece W are subjected to punching and a hole HA (see Fig. 4(B)) is punched out, a blank (slug) at that time is pushed into the die hole 27 of the die tool 25, and an entire peripheral surface of the blank contacts an entire peripheral surface of the die hole 27.

Thereafter, when lifting the punch tool 1, a punch body 11 is firstly lifted and a punch blade 13 is lifted higher than the upper surface of the workpiece W, and then the punch guide 5 is lifted whereby a lower surface of the punch guide 5 is detached upward from the upper surface of the workpiece W. As described above, when the lower surface of the punch guide 5 is detached from the upper surface of the workpiece W, the fluid which has flowed into the annular space 15 of the punch tool 1 in advance is jetted from the multiple fluid jet holes 33 around the through-hole 9 so as to be concentrated onto a position, under the through-hole 9 of the punch tool 1, along an axis of the through-hole 9.

The entire periphery of the slug when punching the hole HA in the workpiece W as described above contacts an entire inner peripheral surface of the die hole 27 in the die tool 25. Accordingly, a slug float-up, that is, the slug adhering to and being lifted with the lower surface of the punch blade 13 is relatively rare. Meanwhile, when the slug stays without falling off the die hole 27, the fluid jetted from the multiple fluid jet holes 33 are concentrated on the central part of the die hole 27 as the punch tool 1 is lifted appropriately. Hence the slug inside the die hole 27 can be dropped effectively.

Next, when performing the punching process on regions Ca and Cb adjacent to the hole HA, as shown in Fig. 4(B), the fluid jet holes 33 (the holes illustrated as white circles without being provided with hatching) at a portion corresponding to the hole HA always remain in an open state without being occluded by the workpiece W. Therefore, in the state of pressing and fixing the workpiece W onto the upper surface of the die tool 25 by using the plate holder 7 of the punch guide 5, the fluid jetted obliquely downward from the fluid jet holes 33 in the open state hits the upper surface of the die tool 25 and is directed to flow into the die hole 27.

Then, when the punch body 11 of the punch tool 1 is brought down to perform the punching process and the punch blade 13 enters the die hole 27, the fluid flows into the die hole 27 through fine clearances between an outer peripheral surface of the punch blade 13 and an inner peripheral surface of the die hole 27 whereby the inflow of the fluid is reduced. Thereafter, as the punch body 11 is lifted and the lower surface of the punch blade 13 is slightly lifted from the lower surface of the workpiece W, that is, the upper surface of the die tool 25, the die hole 27 is opened, so that a large amount of the fluid hitting the upper surface of the die tool 25 and being directed inward flows into the die hole 27.

In this case, when the lower surface of the punch blade 13 is located below the upper surface of the workpiece W, part of the fluid hitting the upper surface of the die tool 25 and being directed to flow inward then flows along the lower surface of the punch blade 13. Therefore, when small slug adheres (or is attached) to the lower surface of the punch blade 13, the attached slug is blown away. Here, in the case of punching as shown in Fig. 4(B), the slug contacts the die hole 27 in three directions (upper, lower, and right sides in Fig. 4(B)). Hence, the slug float-up, that is, the slug adhering to the punch blade 13 and being lifted is relatively rare.

Next, when performing the punching process on regions Da, Db, Cc, Dc, Ad, and Bd as shown in Figs. 4(C) and 4(D) and Fig. 5(C), similar operations and effects to the case explained by use of Fig. 4(B) are obtained.

Meanwhile, when performing the punching process on a region Bc as shown in Fig. 5(A), the size of the generated slug is about 1/4 of the area of the lower surface of the punch blade 13 or the cross-sectional area of the die hole 27, which is small. Moreover, the slug contacts the die hole 27 in two directions (upper and left sides in Fig. 5(A)), so that the slug is apt to move inside the die hole 27 and to adhere to the lower surface of the punch blade 13. As described above, when performing the punching process on the small region Bc, the fluid is jetted from the fluid jet holes 33 around the die holes 27 in mutually intersecting directions toward the center of the die hole 27 as shown in Fig. 5(A).

Therefore, when the plate holder 7 of the punch guide 5 is pressing the workpiece W onto the die tool 25, the fluid jetted from the multiple fluid jet holes 33 corresponding to the hole already punched in the workpiece W to the upper surface of the die tool 25 hits the upper surface of the die tool 25 and is directed to flow toward the central part of the die hole 27 along the lower surface of the punch blade 13. Then, the flows in the intersecting directions merge at the central part of the die hole 27 and part of the flow will flow toward the region Bc.

Accordingly, when performing the punching process on the region Bc and the punch blade 13 is lifted slightly above the upper surface of the die tool 25, a large amount of the fluid jetted from the multiple fluid jet holes 33 corresponding to the hole that is already punched out flows into the die hole 27, and part of the fluid flows toward the region Bc along the lower surface of the punch blade 13. Accordingly, the small slug at the time of the punching process of the region Bc is prevented from adhering to the lower surface of the punch blade 13. That is, even when the slug is equal to or below 1/4 of the area of the die hole 27 and is apt to adhere, for example, the slug float-up caused by the slug adhering to the lower surface of the punch blade 13 can be prevented.

Incidentally, it is also possible to generate a swirling flow by jetting the fluid to be jetted from the multiple fluid jet holes 33 so as to be directed inward in an appropriately oblique manner relative to a radiation direction.

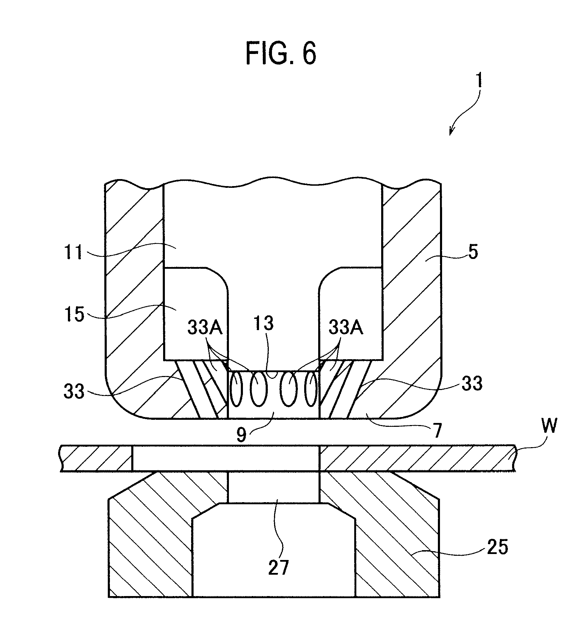

The present invention is not limited to the above-described embodiment and can be implemented in other aspects by adding appropriate changes. For example, as shown in Fig. 6, the present invention may be implemented with a configuration in which multiple second fluid jet holes 33A are provided in a position below the punch blade 13 in a lifted state relative to the punch guide 5 or in a position substantially at the same level as the bunch blade 13, so as to communicatively connect the through-hole 9 to the annular space 15.

In the above-described configuration, it is possible to jet an even larger amount of the fluid and thereby to prevent the slug float-up effectively. Moreover, in this configuration, even in the state in which the plate holder 7 holds the workpiece W, the fluid can be jetted from all of the multiple second fluid jet holes 33A toward the die hole 27 when the punch body 11 is lifted. As a suctioning effect acts on the lower surface of the punch blade 13, the slug float-up can be prevented effectively. Here, the fluid jet holes 33a may be oriented along a peripheral surface of the though hole 9 to form the flow of the fluid jetted from the jet holes 33A into a swirling flow.

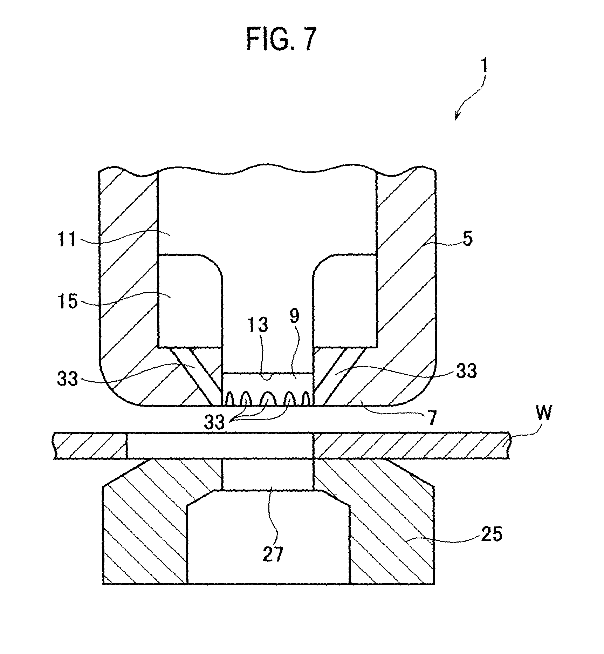

Fig. 7 shows the fluid jet holes 33 formed to be communicated with the lower surface of the plate holder 7 and with the through-hole 9. According to this configuration, the fluid is naturally jetted from the multiple fluid jet holes 33 corresponding to the hole already punched in the workpiece W, and moreover, part of the fluid from the fluid jet holes 33 at a portion where the plate holder 7 holds the workpiece W hits the upper surface of the workpiece W and is directed inward. Hence, when the punch body 11 is lifted, the fluid can be directed toward the lower surface of the punch blade 13 and the slug float-up is prevented.

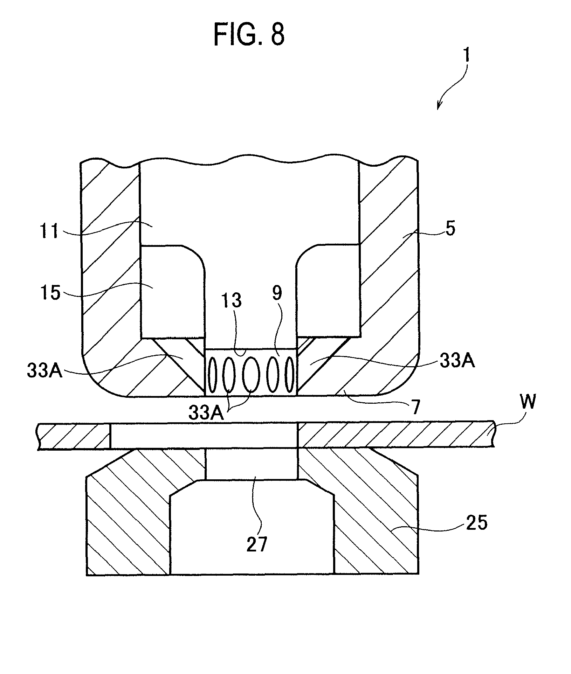

Fig. 8 shows a modified example of Fig. 6, in which only the second fluid jet holes 33A are provided as the fluid jet holes. This configuration can also prevent the slug float-up effectively.

Although the above description has exemplified the case of integrally forming the punch guide 5 and the plate holder 7, the punch guide 5 and the plate holder 7 may be provided separately and the plate holder 7 may be integrally fitted to the punch guide 5 in order to easily process the fluid jet holes. Meanwhile, the fluid to be jetted from the fluid jet holes may be caused to flow horizontally toward the axis of the through-hole 9. In other words, various changes are possible.

The present invention is not limited to the description of the above-described and further the aforementioned embodiments of the invention, and can be implemented in various other aspects by applying appropriate changes.

It is to be noted that the contents of Japanese Patent Application No. 2007-135769 (filed on May 22, 2007) and Japanese Patent Application No. 2008-037670 (filed on February 19, 2008) are incorporated herein by reference in its entirety.

## Claims

1. A slug float-up preventing method in performing a punching process on a plate-shaped workpiece by cooperation between a punch tool and a die tool, comprising the steps of:
pressing the workpiece onto an upper surface of the die tool by use of a plate holder provided on the punch tool;
punching a part of the workpiece out into a die hole in the die tool by use of a punch blade provided on the punch tool;
blowing a large amount of a fluid from a portion of a hole already processed on the workpiece toward a lower side of the punch blade when the punch blade is being lifted and is located above a lower surface of the workpiece and below an upper surface of the workpiece; and
dropping a small piece of slug located below the punch blade into the die hole.

2. The slug float-up preventing method according to claim 1, wherein a direction to blow the fluid is a blowing direction directed from around the punch blade toward a central part of the die hole.

3. The slug float-up preventing method according to claim 1, wherein the fluid is formed into a flow which hits the upper surface of the die tool and is directed toward a center of the die hole.

4. The slug float-up preventing method according to claim 2, wherein the fluid is formed into a flow which hits the upper surface of the die tool and is directed toward a center of the die hole.

5. A punch tool for performing a punching process on a plate-shaped workpiece in cooperation with a die tool, comprising:
a cylindrical punch guide including a plate holder at a lower end thereof; and
a punch body provided to be vertically movable inside the punch guide and including a punch blade at a lower end thereof, wherein
the plate holder includes a through-hole in which the punch blade is vertically movable,
fluid jet holes not communicating with the through-hole are provided in a plurality of positions around the through-hole, and
the plurality of fluid jet holes are directed obliquely downward so as to concentrate the fluid to a central part of a die hole provided on the die tool.

6. The punch tool according to claim 5, further comprising:
second fluid jet holes communicating with the through-hole and located in a plurality of positions around the through-hole, wherein
the plurality of second fluid jet holes are directed obliquely downward so as to concentrate the fluid to the central part of the die hole provided on the die tool.

7. A punch tool for performing a punching process on a plate-shaped workpiece in cooperation with a die tool, comprising:
a cylindrical punch guide including a plate holder on a lower end thereof; and
a punch body provided to be vertically movable inside the punch guide and including a punch blade at a lower end thereof, wherein
the plate holder includes a through-hole in which the punch blade is vertically movable,
fluid jet holes communicating with the through-hole are provided in a plurality of positions around the through-hole, and
the plurality of fluid jet holes are directed obliquely downward so as to concentrate the fluid to a central part of a die hole provided on the die tool.
